## Europäisches Patentamt
## European Patent Office
## Office européen des brevets

(11) Publication number: **0 071 332**
**B1**

# EUROPEAN PATENT SPECIFICATION

(45) Date of publication of patent specification: **09.01.85**

(51) Int. Cl.⁴: **F 16 J 15/16,** F 16 H 25/24

(21) Application number: **82302912.9**

(22) Date of filing: **07.06.82**

(54) **Seal and scraper assemblies.**

(30) Priority: **24.07.81 US 287245**

(43) Date of publication of application:
**09.02.83 Bulletin 83/06**

(45) Publication of the grant of the patent:
**09.01.85 Bulletin 85/02**

(84) Designated Contracting States:
**DE FR GB IT**

(56) References cited:
US-A-2 757 548
US-A-3 669 460
US-A-4 052 076
US-A-4 053 167
US-A-4 159 118
US-A-4 226 431

(73) Proprietor: **GENERAL MOTORS CORPORATION**
**General Motors Building 3044 West Grand Boulevard**
**Detroit Michigan 48202 (US)**

(72) Inventor: **Benton, Robert Laurel**
**4550 Greenfield Drive**
**Bay City Michigan 48706 (US)**
Inventor: **Martinsons, Dainis Olgerts**
**3746 Chilton Drive**
**Saginaw Michigan 48603 (US)**
Inventor: **Stimpson, Flave Frederick**
**3581 Holly Lane**
**Saginaw Michigan 48604 (US)**

(74) Representative: **Breakwell, John Neil Bower et al**
**GM Patent Section Luton Office (F6) P.O. Box No. 3 Kimpton Road**
**Luton Beds. LU2 OSY (GB)**

Courier Press, Leamington Spa, England.

## Description

This invention relates to seal and scraper assemblies for use with nut and screw actuators.

Prior art seals for nut and screw actuators, as exemplified by the disclosure of US—A—3,669,460 (Wysong), utilize a plurality of components which are assembled to provide the seal and scraper assembly. The scraper (wiper) portion of the assembly is generally spring-loaded into engagement with the screw thread form by a separable spring member. This spring member is sized to provide the desired force which the scraper will exert on the thread form.

The present invention relates to a seal and scraper assembly for a nut and screw actuator comprising an annular lip member that abuts and is compressed radially inwardly by a cylindrical surface on the nut at assembly and a thread sealing portion that has a thread form co-operating with the screw thread on the actuator (See US—A—4226431). According to the present invention the thread sealing portion includes a plurality of circumferentially spaced scraper means each defined by a scraper surface extending through the thread form at an angle oblique to a radius of the thread form and terminating at a position radially inwardly of a normal thread form when the screw actuator is not engaging the screw thread, so that the thread sealing portion adjacent the scraper surface must deflect radially outwardly during insertion of the screw actuator, whereby web means connects the lip member to the thread sealing portion along the oblique angle for transferring the force of compression on the lip member to the scraper surface of the thread sealing portion and a lubricant return surface extends in a circumferential direction oblique to the axial direction of the thread form and means is provided for preventing rotation of the lip member and thread sealing portion relative to the nut.

In one specific arrangement of a seal and scraper assembly in accordance with the present invention, a sealing unit and scraper (wiper) edge are formed by an integral elastomeric component which is bonded to a metal case member. The elastomeric member is formed to provide an outer sealing surface and an inner sealing surface in a manner such that during assembly the outer sealing surface is compressed and a portion of the forces of compression is transmitted to the scraper surface, which is integral with the inner sealing surface. This force is transmitted through an integrally formed web member, which may be controlled in size and direction to establish the amount of compressed forces that will be transmitted to the scraper surface.

The seal and scraper assembly has, as well as the outer annular seal, an inner thread form seal portion having an interrupted surface forming a plurality of scraper portions, with web members as foresaid connecting the outer annular seal to each scraper portion to cause a portion of the compression forces of assembly on the outer annular seal to be transmitted to the scraper portions.

The seal and scraper assembly is constructed to permit centering of the seal on the thread if the mounting bore is not concentric with the score thread, and to permit axial lash. Also, the metal case member has a ring-like inner contour effective as a scraper for external foreign material.

In the drawing:

Figure 1 is a fragmentary longitudinal section, partly in elevation, of one embodiment of a seal and scraper assembly in accordance with the present invention with a seal member thereof engaging a screw thread of a nut and screw actuator;

Figure 2 is a cross-section on the line 2—2 of Figure 1, in the direction of the arrows;

Figure 3 is a cross-section on the line 3—3 of Figure 1, in the direction of the arrows;

Figure 4 is a longitudinal section of a seal and scraper assembly as shown in Figure 1;

Figure 5 is a fragmentary section on the line 5—5 of Figure 4, in the direction of the arrows;

Figure 6 is an enlarged fragmentary view on the line 6—6 of Figure 4, in and in the direction of the arrows; and

Figure 7 is a perspective view of the seal and scraper assembly shown in Figure 4.

In the drawing there is shown a seal and scraper assembly, generally designated 10, which is adapted to sealingly engage a conventional nut housing 12 in which is threadably supported a conventional actuator screw 14.

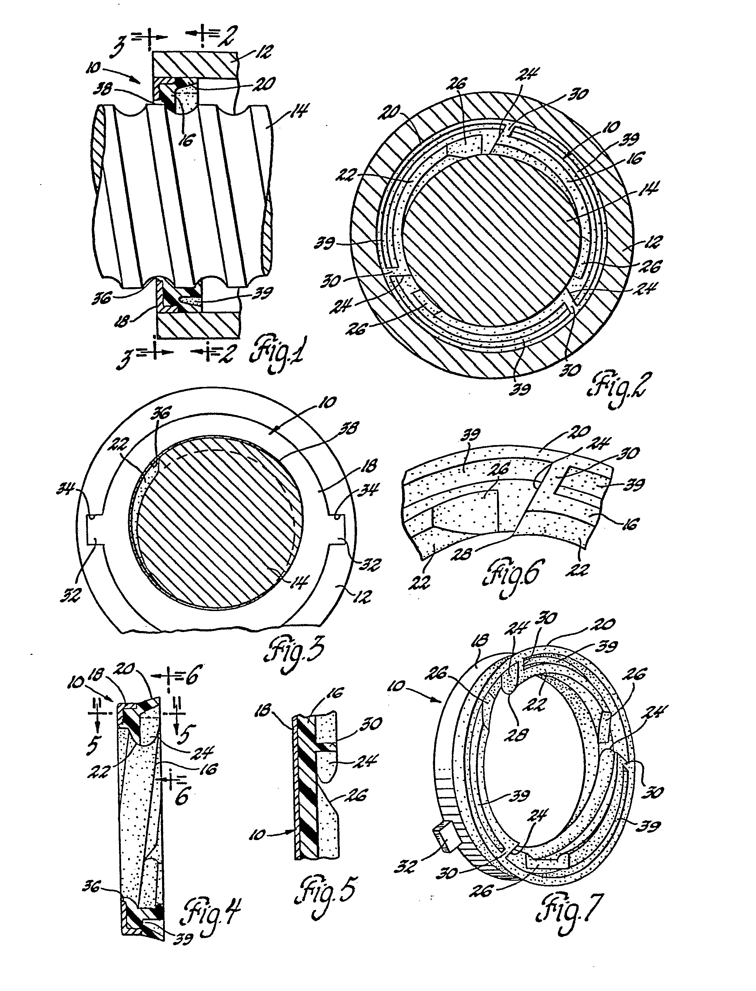

As is best seen in Figures 4 and 5, the assembly 10 has an elastomeric portion 16 which is bonded to a metal ring 18. The elastomeric portion 16 has an outer annular lip type seal portion 20 and an inner thread form seal portion 22. The thread form seal portion 22 is interrupted by a plurality of scraper surfaces 24 which, as best seen in Figure 2, intersect the radial direction of the screw 14 at an angle oblique thereto.

Circumferentially spaced from each scraper surface 24 is a lubricant return surface 26 which is operable to direct lubricant, such as grease, axially inwardly relative to the nut housing 12. As is best seen in Figures 6 and 7, the scraper surface 24 has a leading edge 28 which, in its free state, extends radially inwardly from the thread form seal portion 22. Figures 6 and 7 show that each scraper surface 24 is connected to the annular seal portion 20 by a respective web member 30 which extends with the same angular attitude as the scraper surface 24.

The inner thread form seal 22 is dimensioned to seal along the thread form of the screw 14. The thread form 22 has at least two helical starts so that the interruptions created by the scraper surface 24 and the lubricant return surface 26 do not provide open flow passages through which lubricant can escape.

Figure 1 shows that the seal and scraper assembly 10 slidably engages the inner surface of the nut housing 12 such that the annular lip 20 is forced radially inwardly during assembly. The radially inward movement of the annular sealing lip 20 results in sealing forces between the annular sealing lip 20 and the housing 12. A portion of these forces is transmitted through the web members 30 to the leading edge 28 of the respective scraper surfaces 24.

As is pointed out above, the leading edge 28 of the scraper surface 24 in its free state is disposed radially inwardly of the thread form 22. Therefore, when the seal assembly 10 is engaged by the screw thread 14, the leading edge 28 is forced radially outwardly to assume the thread form shape, such that scraper forces are established. These forces are additive to the forces transmitted through the web members 30, such that sufficiently high wiping forces can be generated without the use of excessively high deflections at the leading edge 28.

The amount of force transmitted through the web 30 is controlled by the physical dimensions of the web, whereas the direction of the force is controlled by angular attitudes. This force can thereby be varied in direction from purely radial to substantially tangential.

The metal ring 18, as best seen in Figures 3 and 7, has a pair of radially extending lugs 32 which engage rectangular slots 34 formed in the nut housing 12. These members co-operate to prevent rotation of the seal assembly 10 relative to the nut housing 12.

The annular lip 20 on the outer diameter of the seal 10 is designed to seal grease in the nut 12 without the use of the extra sealant around the outer diameter which is necessary with current seals. This lip 20 has grooves 39 formed below the lip 20 to allow the seal to centre itself on the screw 14 and still seal around the outer diameter. The screw 14 determines where the seal will be located radially, and the lip 20 has enough flexiblity to seal with a standard amount of out-of-concentricity condition between the counterbore of the nut 12 and the thread of the screw 14.

The seal and scraper assembly 10 is allowed to move axially in the nut 12 to allow for axial lash between the nut 12 and the screw 14. This feature is obtained by allowing the seal 10 to move axially in the slot 34 provided in the nut 12 for the antirotation tang 32. In other words the seal 10 will move axially with the screw 14 for lash allowance, and the lip 20 will slide axially on the inner surface of the nut 12. The most significant feature here is that the elastomeric portion 16 in the thread grooves need not compress to allow for axial lash. Therefore, the occurrence of wear failure will be much reduced.

The metal ring 18 has an inner contour 36 which closely approximates the thread form with which the seal assembly 10 is utilized. Therefore, during operation, the surface 36 is in very close spatial relationship with the outer surface 38 of the thread 14. Any foreign matter such as ice which might collect on the screw thread 14 outboard of the nut housing 12 will be removed therefrom when the outer surface 38 of the screw 14 moves past the contoured inner surface 36 of the metal ring. This will prevent solid foreign material from hardening to the thread form and being transmitted past the seal assembly.

## Claims

1. A seal and scraper assembly for a nut and screw actuator, comprising an annular lip member (20) that abuts and is compressed radially inwardly by a cylindrical surface on the nut (12) at assembly and a thread sealing portion (22) that has a thread form co-operating with the screw thread (14) on the actuator, characterised in that the thread sealing portion (22) includes a plurality of circumferentially spaced scraper means each defined by a scraper surface (24) extending through the thread form at an angle oblique to a radius of the thread form and terminating at a position radially inwardly of a normal thread form when the screw actuator is not engaging the screw thread, so that the thread sealing portion adjacent the scraper surface must deflect radially outwardly during insertion of the screw actuator, in that web means (30) connects the lip member to the thread sealing portion along the oblique angle for transferring the force of compression of on the lip member to the scraper surface of the thread sealing portion, in that a lubricant return surface (26) extends in a circumferential direction oblique to the axial direction of the thread form, and in that means (32, 34) is provided for preventing rotation of the lip member and thread sealing portion relative to the nut.

2. A seal and scraper assembly according to claim 1, characterised in that a metal ring member (18) has a contoured surface (36) disposed in close proximity to the thread (14) of the screw to remove foreign matter from the thread as the screw translates inboard of the metal ring member.

3. A seal and scraper assembly according to claim 2, characterized in that the annular lip member (20) and the thread sealing portion (22) comprise portions of an elastomeric seal member (16) which is bonded to the metal ring member (18), and that the means (32, 34) for preventing rotation of the lip member and thread sealing portion relative to the nut (12) comprise means (32) on the metal ring member co-operating with means (34) on the nut.

4. A seal and scraper assembly according to claim 3, characterised in that the means for preventing relative rotation comprises a lug and slot connection (32, 34) permitting relative axial movement of the parts thereof.

5. A seal and scraper assembly according to claim 3 or 4, characterized in that the elastomeric seal member (16) is formed with grooves (39) radially inwardly of the annular lip member (20) to allow the seal member to centre on the screw thread (14).

## Patentansprüche

1. Dichtungs- und Abstreiferanordnung für ein aus Mutter und Schraube bestehendes Stellglied, mit einem ringförmigen Lippenteil (20), das beim Zusammenbau an einer zylindrischen Fläche der Mutter (12) aufsitzt und durch sie radial nach innen zusammengedrückt wird, und einem Gewinde-Dichtabschnitt (22), der eine mit dem Schraubengewinde (14) an dem Stellglied zusammenwirkende Gewindeform besitzt, dadurch gekennzeichnet, daß der Gewindedichtabschnitt (22) eine Vielzahl von in Umfangsrichtung beabstandeten Abstreifmitteln enthält, die jeweils durch eine Abstreiferfläche (24) bestimmt sind, welche sich durch die Gewindeform mit einem schrägen Winkel zu einem Radius Gewindeform erstreckt und an einer radial innerhalb einer normalen Gewindeform gelegenen Stelle endet, wenn das Schrauben-Stellglied das Schraubengewinde nicht erfaßt, so daß der der Abstreiffläche benachbarte Gewindedichtabschnitt radial nach außen während des Einsetzens des Schraubenstellgliedes ausweichen muß, daß Stegmittel (30) das Lippenteil mit dem Gewindedichtabschnitt längs des schrägen Winkels verbinden zum Übertragen der Druckkraft auf das Lippenteil zu der Abstreiffläche des Gewindedichtabschnittes, daß eine Schmiermittel-Rückleitfläche (26) sich in einer Umfangsrichtung schräg zur Axialrichtung der Gewindeform erstreckt, und daß Mittel (32, 34) vorgesehen sind zur Verhinderung einer Drehung des Lippenteils und des Gewindedichtabschnittes relativ zu der Mutter.

2. Dichtungs- und Abstreiferanordnung nach Anspruch 1, dadurch gekennzeichnet, daß ein Metallringteil (18) eine in enger Nachbarschaft zu dem Gewinde (14) der Schraube angeordnete profilierte Oberfläche (36) besitzt, um Fremdmaterie von dem Gewinde zu entfernen, wenn die Schraube sich in das Metallringteil hineinverschiebt.

3. Dichtungs- und Abstreiferanordnung nach Anspruch 2, dadurch gekennzeichnet, daß das ringförmige Lippenteil (20) und der Gewindedichtabschnitt (22) Abschnitte eines elastomeren Dichtteiles (16) enthalten, der mit dem Metallringteil (18) verbunden ist, und daß die Mittel (32, 34) zum Verhindern einer Drehung des Lippenteils und des Gewindedichtabschnittes relativ zur Mutter (12) mit Mitteln (34) an der Mutter zusammenwirkende Mittel (32) an dem Metallringteil enthalten.

4. Dichtungs- und Abstreiferanordnung nach Anspruch 3, dadurch gekennzeichnet, daß die Mittel zur Verhinderung einer Relativdrehung eine Zapfen- und Nut- Verbindung (32, 34) umfassen, die eine axiale Relativbewegung ihrer Teile zuläßt.

5. Dichtungs- und Abstreiferanordnung nach Anspruch 3 oder 4, dadurch gekennzeichnet, daß das elastomere Dichtteil (16) mit radial innerhalb des ringförmigen Lippenteils (20) befindlichen Nuten (39) ausgebildet ist, um dem Dichtteil eine Zentrierung an dem Schraubengewinde (14) zu gestatten.

## Revendications

1. Un ensemble joint et racleur pour un dispositif d'actionnement à écrou et vis, comprenant un élément formant lèvre annulaire (20) qui, dans l'assemblage, s'appuie contre une surface cylindrique de l'écrou (12) et est comprimé radialement vers l'intérieur par cette surface; et une partie d'étanchéité de filetage (22) qui possède un profil de filetage coopérant avec le filetage de la vis (14) du dispositif d'actionnement, caractérisé en ce que la partie d'étanchéité de filetage (22) comprend une pluralité de moyens racleurs espacés circonférentiellement, définis chacun par une surface racleuse (24) qui s'étend en travers du profile de filetage, selon une direction oblique par rapport à un rayon du profil du filetage et se termine dans une position située radialement à l'intérieur par rapport à un profile de filetage normal lorsque le dispositif d'actionnement à vis n'est pas en prise avec le filetage de la vis, de sorte que la partie d'éanchéité de filetage adjacente à la surface racleuse est contrainte de fléchir radialement vers l'extérieur pendant la mise en place du dispositif d'actionnement à vis, en ce que des moyens (30) formant voile relient l'élément formant lèvre à la partie d'étanchéité de filetage selon la direction oblique, pour transmettre la force de compression exercée sur l'élément formant lèvre à la surface racleuse de la partie d'étanchéité de filetage, en ce qu'une surface de retour de lubrifiant (26) s'étend dans une direction circonférentielle oblique à la direction axiale du profil de filetage, et en ce que des moyens (32, 34) sont prévus pour empêcher la rotation de l'élément formant lèvre et de la partie d'étanchéité de filetage par rapport à l'écrou.

2. Un ensemble joint et racleur selon la revendication 1, caractérisé en ce qu'un élément formant bague métallique (18) possède une surface profilée (36) disposée à très grande proximité du filetage de la vis (14) pour détacher les matières étrangères du filetage lorsque la vis pénètre par translation à l'intérieur de l'élément bague métallique.

3. Un ensemble joint re racleur selon la revendication 2, caractérisé en ce que l'élément formant lèvre annulaire (20) et la partie d'étanchéité de filetage (22) constituent des parties d'un élément formant joint en élastomère (16) qui est fixé à l'élément formant bague métallique (18), et en ce que les moyens (32, 34) servant à empêcher la rotation de l'élément formant lèvre et de la partie d'étanchèite de filetage par rapport à l'écrou (12) comprennent des moyens (32) prévus sur l'élément formant bague métallique et qui coopèrent avec des moyens (34) prévus sur l'écrou.

4. Un ensemble joint et racleur selon la revendication 3, caractérisé en ce que les moyens servant à empêcher la rotation relative comprennent un assemblage à patte et rainure (32, 34) qui permet un déplacement axial relatif de ces éléments.

5. Un ensemble joint et racleur selon la revendication 3 ou 4, caractérisé en ce que l'élément formant joint en élastomère (16) est muni de gorges (39) situées radialement à l'intérieur par rapport à l'élément formant lèvre annulaire (20) pour permettre à l'élément formant joint de se centrer sur le filetage de la vis (14).

Fig.1

Fig.2

Fig.3

Fig.6

Fig.4

Fig.5

Fig.7